# EUROPÄISCHE PATENTSCHRIFT

(11) **EP 3 083 033 B1**
(45) Veröffentlichungstag und Bekanntmachung des Hinweises auf die Patenterteilung: **10.01.2018**
(21) Anmeldenummer: 14801992.0
(22) Anmeldetag: 17.11.2014
(51) Int. Cl.: B01J 19/02, B01J 8/00

(54) **REAKTORGEFÄSS ODER REAKTORGEFÄSSAUSKLEIDUNG**
REACTOR VESSEL OR REACTOR VESSEL LINING
CUVE DE RÉACTEUR OU HABILLAGE DE CUVE DU RÉACTEUR

(30) Priorität: 16.12.2013 DE 102013021352; 21.01.2014 DE 102014000933
(43) Veröffentlichungstag der Anmeldung: 26.10.2016
(73) Patentinhaber: EPC Engineering Consulting GmbH, 07407 Rudolstadt (DE)
(72) Erfinder: HENKEL, Tim, 98746 Meuselbach-Schwarzmühle (DE); KUMMER, Dietmar, 07407 Rudolstadt (DE)
(74) Vertreter: Kruspig, Volkmar
(86) Internationale Anmeldenummer: PCT/EP2014/074732
(87) Internationale Veröffentlichungsnummer: WO 2015/090781

(56) Entgegenhaltungen:
- WO-A1-2013/053495
- US-A1- 2010 061 902

## Beschreibung

Die Erfindung betrifft ein Reaktorgefäß oder eine Reaktorgefäßauskleidung, insbesondere für einen Polymerisationsreaktor, wiederum insbesondere für die Herstellung von Acrylnitrilcopolymerisaten durch Suspensionspolymerisation gemäß Oberbegriff des Anspruchs 1.

Gemäß beispielsweise der EP 2 032 749 B1 gehören Reaktoren für die Faserproduktion zum Stand der Technik. Derartige Reaktoren bestehen üblicherweise aus einem langgestreckten, zylindrischen Reaktionsgefäß. Im Gefäß befindet sich im Gebrauch ein einen Katalysator enthaltendes Partikelreaktionsbett, wobei darüber hinaus die Reaktionsgefäße verschiedene Ein- und Auslässe aufweisen. Zusätzlich besteht die Möglichkeit, über einen Gefäßdeckel ein Rührwerk mit Rührer, z.B. ausgeführt als Kreuzbalkenrührer, einzuführen.

Bei bisher eingesetzten Reaktoren insbesondere für die Herstellung von Acrylnitrilcopolymerisaten durch Suspensionspolymerisation in wässrigen Medien stellt sich das Anbackverhalten während der Polymerisation auf der Oberfläche der Behälterinnenwandung als Problem dar. Auch bei Edelstahlausführungen entsprechender Reaktorgefäße ergibt sich die Notwendigkeit des Auskochens der Reaktoren mit NaOH und aufwendigen Entsorgungsproblemen. Die erforderliche Reinigung der Anlage führt dazu, dass eine Stilllegung erforderlich wird einschließlich Entleerung der Reaktoren und deren Spülung.

Um dem Anbacken zu begegnen, wurde bereits vorgeschlagen, als Reaktorgefäßwerkstoff Aluminiummagnesium, d.h. Aluminium mit bis zu 5,5 % Magnesiumanteilen in der Legierung einzusetzen. Ein solcher Behälter weist die ausreichende notwendige Festigkeit und Wanddicke auf. Der Abtrag des Materials beträgt ca. 1,5 mm bis 2 mm pro Jahr. Damit ergibt sich bei üblichen Wanddicken eine Standzeit entsprechender Behältnisse von maximal fünf Jahren.

Auch bei dem Reaktor nach EP 2 032 749 B1 wird auf den Einsatz von Aluminiumlegierungen zurückgegriffen, jedoch erfolgt dort die Verwendung derartiger Materialien nur im Bereich des Gaseintritts.

Bei auf die Anmelderin zurückgehenden Werkstoffprüfungsuntersuchungen hat sich im Rahmen umfangreicher Analysen herausgestellt, dass Aluminiummaterialien in einer Reinheit von ≥ 99,9 % nur ein äußerst geringes Anbackverhalten zeigen, und zwar auch im Vergleich zu Versuchsreihen mit Proben aus besonderen Stahlmaterialien oder Titan. Der sich hieraus ergebenden positiv zu beurteilenden chemischen Beständigkeit, d.h. auch Korrosionsfestigkeit des Werkstoffs und der reduzierten Neigung des Polymers zu festen Anlagerungen steht jedoch eine äußerst geringe mechanische Festigkeit gegenüber.

Um das vorstehend geschilderte Problem zu lösen, wurde im Stand der Technik daher auf den Einsatz von dickwandigen Behältern auf der Basis von Aluminiummagnesiumlegierungen, d.h. härteren Aluminiummaterialien mit größerer Stabilität zurückgegriffen. Das Korrosions- und Abtragverhalten eines solchen Materials ist jedoch nicht im Sinne eines Langzeitbetriebs derartiger Reaktoren optimal.

Eine naheliegende Möglichkeit des chemischen oder physikalischen Abscheidens hochreiner Aluminiumschichten auf einem Stahlgrundkörper eines Reaktorgefäßes führt ebenfalls nicht zum Erfolg, da bedingt durch die Reaktionen und die mechanischen Belastungen innerhalb des Reaktorgefäßes ein Materialabtrag eintritt, der so groß ist, dass die z.B. im CVD abgeschiedene Schicht in kurzer Zeit zerstört bzw. verbraucht ist.

Aus dem Vorgenannten ist es daher Aufgabe der Erfindung, ein weiterentwickeltes Reaktorgefäß oder eine Reaktorgefäßauskleidung, insbesondere für einen Polymerisationsreaktor anzugeben, das bzw. die ausreichende Sicherheit gegen Anbacken der Polymerisate bietet und gleichzeitig einen Langzeitbetrieb mit nur minimaler korrosionsbedingter Betriebsunterbrechung gewährleistet.

Die Lösung der Aufgabe der Erfindung erfolgt durch die Merkmalskombination gemäß Patentanspruch 1, wobei die Unteransprüche mindestens zweckmäßige Ausgestaltungen und Weiterbildungen umfassen.

Es wird demnach von einem Reaktorgefäß oder einer Reaktorgefäßauskleidung ausgegangen, und zwar insbesondere von einem Polymerisationsreaktor für die Herstellung von Acrylnitrilcopolymerisaten durch Suspensionspolymerisation .

Erfindungsgemäß ist mindestens die Gefäßaußenwandung aus einem Grundkörper hoher mechanischer Festigkeit, nämlich Stahl oder Edelstahl bestehend.

Der Grundkörper weist eine zum Reaktionsraum weisende Beschichtung aus hochreinem Aluminium mit einer Schichtdicke von > 1 mm, vorzugsweise im Bereich von 1 mm bis 15 mm auf. Diese Schichtdicke ermöglicht einen langjährigen Betrieb entsprechender Reaktoren ohne Grundinstandsetzung.

Weiterhin erfindungsgemäß besteht die Beschichtung aus einem Aluminium mit einer Reinheit von ≥ 99,9 % insbesondere von 99,99 % bis 99,999 %.

Erst durch die Beschichtung aus einem solchen hochreinen Aluminium, und zwar in der vorerwähnten ausreichenden Schichtdicke, ist gewährleistet, dass einerseits das Anbacken von Polymerisaten weitgehend verhindert wird und andererseits der prozessbedingte Materialabtrag nicht vorschnell zu einem Ausfall des Reaktorgefäßes führt.

In Ausgestaltung der Erfindung werden Schweißnähte mit einem Schweißmaterial ausgeführt, wobei das Schweißmaterial ebenfalls aus Reinstaluminium ≥ 99,9 % besteht.

Am oder im Reaktorgefäß befindliche Stutzen oder Flansche besitzen bevorzugt eine Aluminium-Innengalvanisierung bzw. Aluminium-Innenauskleidung oder sind als Ganzes aus Aluminium gefertigt, so dass auch dort die Vorteile der Aluminiumbeschichtung zutage treten.

In weiterer Ausgestaltung der Erfindung wird die Beschichtung als Sprengplattier-Pressschweiß-Beschichtung ausgeführt.

Es hat sich in überraschender Weise gezeigt, dass eine Stahlmaterialplatte in einem einzigen Sprengplattierschritt mit einer mehreren Millimeter dicken hochreinen Aluminiumplatte stoffschlüssig verbunden werden kann, wobei die stoffschlüssige Verbindung allen mechanischen Belastungen auch bei einer Verformung des plattenförmigen Materials, z.B. hin zu einem Grundmaterial im Sinne eines hohlzylindrischen Gefäßes widersteht. Auch bei langanhaltender thermischer oder mechanischer Belastung löst sich die in erheblicher Schichtdicke ausgeführte Beschichtung nicht vom Grundmaterial.

Dies ist insofern überraschend, als dass Ausgangsmaterial und Beschichtungsmaterial Stahl / Aluminium erhebliche unterschiedliche Wärmeausdehnungskoeffizienten besitzen.

Im Ergebnis der Beschichtung bildet sich erfindungsgemäß im Grenzflächenbereich Grundkörpermaterial und Schicht aus hochreinem Aluminium eine hochfeste metallische Bindung mit einer quasi wellenförmigen Struktur aus.

Erfindungsgemäß werden auch zum Einsatz kommende Reaktorgefäßdeckel mit einer Beschichtung aus hochreinem Aluminium im Bereich ≥ 99,99 % eingesetzt.

In bevorzugter Ausgestaltung der Erfindung wird der Grundkörper als Doppelmantelgefäß ausgeführt, wobei die sprengplattierte Materialkombination nur an der Innenseite oder Innenwandung des Grundkörpers zum Einsatz kommt.

Wie bereits angedeutet, besteht der Grundkörper mit Beschichtung aus einem im Ursprungszustand plattenförmigen Material, welches zur geometrischen Gestalt des Grundkörpers verformt und an der oder den Nahtstellen verschweißt ist.

In bevorzugter Ausgestaltung der Erfindung ist die Oberfläche der Aluminiumbeschichtung walzglatt ausgebildet.

Es hat sich gezeigt, dass die Abtragungsrate von hochreinem Aluminium 99,99 um nahezu den Faktor 10 günstiger als die Abtragungsrate von Aluminiummaterialien ist, die eine Beimischung von Magnesium zur Bildung einer AlMg-Legierung enthalten. Hieraus ergibt sich eine Erhöhung der Standzeit um ein Vielfaches.

Die Bedenken der Fachwelt bezüglich des Einsatzes von hochreinen und damit sehr weichen Aluminiummaterialien konnten durch die Nutzung der Technologie des Sprengplattierens überwunden werden, wobei sich die feste Bindung zwischen Grundmaterial und Beschichtung auch im Einsatzbereich eines Reaktorgefäßes als überraschend herausgestellt hat, und zwar bedingt durch die Reaktortemperaturverhältnisse und mit Blick auf die Wärmeausdehnungskoeffizienten der eingesetzten Materialien.

Von besonderem Vorteil ist der Einsatz eines Aluminiumwerkstoffs mit einer Reinheit von 99,999 %. Die Maßanteile von Kupfer liegen hier bei 0,2 ppm und von Eisen bei 1,02 ppm, d.h. der Anteil kritischer Beimengungen ist minimal und liegt noch um ein Wesentliches niedriger als bei einem Aluminiummaterial der Reinheit 99,99 % mit Kupfer ca. 3,85 ppm und Eisen ca. 2,59 ppm.

Bei dem zur Anwendung kommenden Verfahren zur Schaffung der Materialkombination für die Gefäßinnenwandung des Reaktorgrundkörpers wird von einem Stahlbasismaterial ausgegangen. Gegebenenfalls beabstandet wird auf das Grundmaterial das Beschichtungsmaterial z.B. mit einer Schichtdicke von 4 mm aufgelegt. Damit stehen sich metallblanke Oberflächen gegenüber. Zum Zweck der Plattierung wird im Anschluss auf das lose Sandwich eine Sprengmasse aufgelegt und gezündet.

Im Rahmen des Sprengprozesses kommt es zur Ausbildung einer Detonationsfront über das Sandwichpaket mit einem Materiestrahl Auflagematerial zu Grundmaterial. In der Verbindungszone entsteht eine metallische, stoffschlüssige Bindung mit Wellenstruktur als Ergebnis der vollzogenen extremen Kaltverformung. Im Ergebnis des Sprengplattierens können Schichtdicken bis zu 15 mm im Rahmen von Standardprozessen erzeugt werden.

Obwohl sich die Erfindung primär auf ein Reaktorgefäß oder eine Reaktorgefäßauskleidung für einen Polymerisationsreaktor bezieht, kann die erfindungsgemäße Lehre selbstverständlich auch auf Behälter und Rohrleitungen für solche Prozessstufen Verwendung finden, die der Polymerisation vor- oder nachgelagert sind, wie z.B. die Monomervorbereitung, die Polymerwäsche oder aber auch im Schritt der Polymerseparation, d.h. der Abtrennung von Restwasser.

Die Erfindung bezieht sich insofern auch auf die erfindungsgemäße Verwendung des Verfahrens des Sprengplattierens zum Herstellen eines Grundkörpers beliebiger geometrischer Form für dessen Einsatz als Reaktorgefäß in der chemischen oder verarbeitenden Industrie unter dem Aspekt eines optimalen Langzeitverhaltens mit reduziertem Anbacken von Reaktionsprodukten am Reaktorgefäßinnenbereich.

## Patentansprüche

1. Reaktorgefäß oder Reaktorgefäßauskleidung, insbesondere für einen Polymerisationsreaktor, wiederum insbesondere für die Herstellung von Acrylnitrilcopolymerisaten durch Suspensionspolymerisation, **dadurch gekennzeichnet, dass** mindestens die Gefäßaußenwandung aus einem Grundkörper hoher mechanischer Festigkeit, nämlich Stahl oder Edelstahl, besteht, wobei der Grundkörper eine zum Reaktionsraum weisende Beschichtung aus hochreinem Aluminium mit einer Reinheit von ≥ 99,9%, mit einer Schichtdicke > 1 mm, vorzugsweise im Bereich von im Wesentlichen 1 mm bis 15 mm aufweist.

2. Reaktorgefäß nach Anspruch 1,
**dadurch gekennzeichnet, dass**
die Beschichtung aus Aluminium mit einer Reinheit von ≥ 99,99% bis 99,999% besteht.

3. Reaktorgefäß nach Anspruch 1 oder 2,
**dadurch gekennzeichnet, dass**
ausgeführte Schweißnähte aus Schweißmaterial aus Reinstaluminium mit mindestens einer Reinheit von 99,9% bestehen.

4. Reaktorgefäß nach einem der vorangegangenen Ansprüche,
**dadurch gekennzeichnet, dass**
ausgeführte Stutzen oder Flansche am oder im Reaktor eine Aluminium-Innengalvanisierung besitzen.

5. Reaktorgefäß nach einem der Ansprüche 1 oder 2,
**dadurch gekennzeichnet, dass**
die Beschichtung als Sprengplattier-Pressschweiß-Beschichtung ausgeführt ist.

6. Reaktorgefäß nach einem der vorangegangenen Ansprüche,
**dadurch gekennzeichnet, dass**
sich im Ergebnis der Beschichtung ein Grenzflächenbereich Grundkörpermaterial und hochreinem Aluminium in Form einer hochfesten metallischen Bindung mitwellenförmiger Struktur einstellt.

7. Reaktorgefäß nach einem der vorangegangenen Ansprüche,
**dadurch gekennzeichnet, dass**
ein Reaktorgefäßdeckel eine Beschichtung aus hochreinem Aluminium aufweist.

8. Reaktorgefäß nach einem der vorangegangenen Ansprüche,
**dadurch gekennzeichnet, dass**
der Grundkörper als Doppelmantelgefäß ausgebildet ist.

9. Reaktorgefäß nach einem der vorangegangenen Ansprüche,
**dadurch gekennzeichnet, dass**
der Grundkörper mit Beschichtung aus einem im Ausgangszustand plattenförmigen Material besteht, welches zur geometrischen Gestalt des Grundkörpers verformt und an der oder den Nahtstellen verschweißt ist.

10. Reaktorgefäß nach einem der vorangegangenen Ansprüche,
**dadurch gekennzeichnet, dass**
die Oberfläche der Aluminiumbeschichtung walzglatt ausgebildet ist.

## Claims

1. Reactor vessel or reactor vessel lining, in particular for a polymerization reactor, again in particular for producing acrylonitrile copolymers by suspension polymerization, **characterized in that** at least the outer wall of the vessel is composed of a base body of high mechanical resistance, namely steel or stainless steel, wherein the base body comprises a coating of ultrapure aluminum having a purity of ≥ 99.9%, having a layer thickness of > 1 mm, preferably in the range of substantially 1 mm to 15 mm, which coating is facing the reaction chamber.

2. Reactor vessel according to claim 1,
**characterized in that**
the coating is composed of aluminum having a purity of ≥ 99.99% to 99.999%.

3. Reactor vessel according to claim 1 or 2,
**characterized in that**
realized welding seams are composed of a welding material of ultrapure aluminum having at least a purity of 99.9%.

4. Reactor vessel according to any one of the preceding claims,
nozzles or flanges realized on or in the reactor have an inner electroplating of aluminum.

5. Reactor vessel according to any one of claims 1 or 2,
**characterized in that**
the coating is realized as an explosive cladding-pressure welding coating.

6. Reactor vessel according to any one of the preceding claims,
**characterized in that**,
as a result of the coating, an interface area of base body material and ultrapure aluminum in the form of a high-strength metallic bond having an undulated structure is yielded.

7. Reactor vessel according to any one of the preceding claims,
**characterized in that**
a reactor vessel lid comprises a coating of ultrapure aluminum.

8. Reactor vessel according to any one of the preceding claims,
**characterized in that**
the base body is formed as a double jacket vessel.

9. Reactor vessel according to any one of the preceding claims,
**characterized in that**
the base body including the coating is composed of a material that is plate-shaped in the initial state, which is deformed into the shape of the base body and welded at the joint(s).

10. Reactor vessel according to any one of the preceding claims,
**characterized in that**
the surface of the aluminum coating is of a smoothly rolled configuration.

## Revendications

1. Cuve de réacteur ou habillage de cuve de réacteur, en particulier pour un réacteur de polymérisation, destiné en particulier à la préparation de copolymérisats d'acrylonitrile par polymérisation en suspension,
**caractérisée en ce que**
au moins la paroi extérieure de la cuve est constituée en un corps de base de haute résistance mécanique, à savoir en acier ou en acier inoxydable, le corps de base présentant un revêtement en aluminium hautement pur d'une pureté ≥ 99,9 % et d'une épaisseur de couche > 1 mm, de préférence dans la plage sensiblement de 1 mm à 15 mm, qui est dirigé vers la chambre de réaction.

2. Cuve de réacteur selon la revendication 1,
**caractérisée en ce que**
le revêtement est constitué en aluminium d'une pureté ≥ 99,99 % à 99,999 %.

3. Cuve de réacteur selon la revendication 1 ou 2,
**caractérisée en ce que**
les cordons de soudure réalisés en matériau de soudage sont constitués en aluminium le plus pur d'une pureté d'au moins 99,9 %.

4. Cuve de réacteur selon l'une des revendications précédentes,
**caractérisée en ce que**
des manchons ou des flasques réalisés sur ou dans le réacteur possèdent une galvanisation intérieure en aluminium.

5. Cuve de réacteur selon l'une des revendications 1 ou 2,
**caractérisée en ce que**
le revêtement est réalisé sous forme de revêtement soudé par pression et par explosion.

6. Cuve de réacteur selon l'une des revendications précédentes,
**caractérisée en ce que**
le résultat du revêtement est une zone de surface limite entre le matériau de corps de base et l'aluminium pur sous la forme d'une liaison métallique hautement résistante à structure ondulée.

7. Cuve de réacteur selon l'une des revendications précédentes,
**caractérisée en ce que**
un couvercle de la cuve de réacteur présente un revêtement en aluminium hautement pur.

8. Cuve de réacteur selon l'une des revendications précédentes,
**caractérisée en ce que**
le corps de base est réalisé sous la forme d'une cuve à enveloppe double.

9. Cuve de réacteur selon l'une des revendications précédentes,
**caractérisée en ce que**
le corps de base avec revêtement est constitué en un matériau, étant en forme de plaque dans un état initial, qui est déformé en la forme géométrique du corps de base et qui est soudé sur le ou les emplacements de soudure.

10. Cuve de réacteur selon l'une des revendications précédentes,
**caractérisée en ce que**
la surface du revêtement en aluminium est réalisée avec un lissé au rouleau.
